# EUROPEAN PATENT APPLICATION

(11) **EP 4 797 289 A1**
(43) Date of publication of application: **26.08.2026**
(21) Application number: 24879779.7
(22) Date of filing: 17.10.2024
(51) Int. Cl.: H01B 1/06, H01B 1/08, H01G 11/30, H01G 11/52, H01G 11/56, H01G 11/70, H01M 4/13, H01M 4/62, H01M 10/052, H01M 10/054, H01M 10/056, H01M 10/0562, H01M 12/08

(54) **PARTICLES, COMPOSITE, SHEET, AND POWER STORAGE DEVICE**

(30) Priority: 17.10.2023 JP 2023178554
(71) Applicant: Niterra Co., Ltd., Nagoya-shi, Aichi 461-0005 (JP)
(72) Inventor: MATSUOKA Takayuki, Nagoya-shi, Aichi 461-0005 (JP); YOSHIDA Hiroaki, Nagoya-shi, Aichi 461-0005 (JP); OTANI Kazushi, Nagoya-shi, Aichi 461-0005 (JP); SHISHIHARA Daisuke, Nagoya-shi, Aichi 461-0005 (JP); HIKOSAKA Hideaki, Nagoya-shi, Aichi 461-0005 (JP); TAKEUCHI Yuki, Nagoya-shi, Aichi 461-0005 (JP); NOBA Ryota, Nagoya-shi, Aichi 461-0005 (JP)
(74) Representative: Zimmermann & Partner Patentanwälte mbB
(86) International application number: PCT/JP2024/037018
(87) International publication number: WO 2025/084358

(57) **Abstract**

To provide particles (19) that can achieve an optimized surface, a composite (10), a sheet (15), and a power storage device (11). The particles are formed of an oxide-based solid electrolyte. A graph (22) of cumulative pore volume distribution in which a logarithmic-scale horizontal axis represents a pore size of the particles and a vertical axis represents a pore volume of the particles includes a change point (25) between a first point (23) at a pore size of 10.3 µm and a second point (24) at a pore size of 3.6 nm. The slope of a tangent (27) at a point on the graph heading from the first point to the second point has such a feature that, in a vicinity of the change point, the slope of a tangent between the change point and the second point becomes greater than the slope of a tangent between the first point and the change point. The composite contains the particles and an electrolytic solution. The sheet contains the composite.

## Description

### TECHNICAL FIELD

The present invention relates to particles of an oxide-based solid electrolyte, to a composite, to a sheet, and to a power storage device.

### BACKGROUND ART

The surfaces of the particles of a solid electrolyte, which influence electrochemical reaction and interfacial phenomena, must have optimum conditions.

### CITATION LIST

### PATENT LITERATURE

Patent Literature 1: JP6735425B

### SUMMARY OF INVENTION

### TECHNICAL PROBLEM

The surfaces of the particles of an oxide-based solid electrolyte disclosed in Patent Literature 1 and the like also must be optimized.

### SOLUTION TO PROBLEM

The present invention has been conceived to satisfy the requirement, and objects of the invention are to provide particles that can achieve an optimized surface, a composite, a sheet, and a power storage device.

In a first aspect of the invention to attain the above objects, there are provided particles of an oxide-based solid electrolyte, in which a graph of cumulative pore volume distribution in which a logarithmic-scale horizontal axis represents a pore size of the particles and a vertical axis represents a pore volume of the particles includes a change point between a first point at a pore size of 10.3 µm and a second point at a pore size of 3.6 nm; and the slope of a tangent at a point on the graph heading from the first point to the second point has such a feature that, in a vicinity of the change point, the slope of a tangent between the change point and the second point becomes greater than the slope of a tangent between the first point and the change point.

In a second aspect, in the graph of the first aspect, a line segment connecting the first point to the change point has a slope of 0.035 cm³/g/µm or less.

In a third aspect, in the graph of the first or second aspect, the sum of pore volume within a range of the first point and the change point is 0.2 cm³/g or less.

In a fourth aspect, in the graph of any of the first to third aspects, the sum of pore volume within a range of the first point and the second point is less than 0.4 cm³/g.

In a fifth aspect, the solid electrolyte of any of the first to fourth aspects has a garnet-type crystal structure including Li, La, and Zr.

A sixth aspect of the invention provides a composite containing particles as recited in any of the first to fifth aspects and an electrolytic solution.

A seventh aspect of the invention provides a sheet containing a composite as recited in the sixth aspect.

An eighth aspect of the invention provides a power storage device including a positive electrode layer, a negative electrode layer, a separator which isolates the positive electrode layer from the negative electrode layer, and the composite of the sixth aspect.

In a ninth aspect, the separator of the eighth aspect includes a composite.

In a tenth aspect, at least one of the positive electrode layer and the negative electrode layer of the eighth or ninth aspect includes a current-collector layer; the power storage device has a protective layer in contact with at least one of the separator and the current-collector layer; and the protective layer includes a composite.

### ADVANTAGEOUS EFFECTS OF INVENTION

According to the present invention, the graph of cumulative pore volume distribution of particles includes a change point between a first point at a pore size of 10.3 µm and a second point at a pore size of 3.6 nm. The slope of a tangent at a point on the graph heading from the first point to the second point has such a feature that, in a vicinity of the change point, the slope of a tangent on the second point side becomes greater than the slope of a tangent on the first point side. Since the graph of Log differential intrusion (i.e., Log differential pore volume) distribution exhibits a peak between the change point and the second point, the surfaces of the particles and those of the particles contained in a composite, sheet, and power storage device can be optimized.

### BRIEF DESCRIPTION OF DRAWINGS

FIG. 1 is a cross-section of a power storage device containing the composite of the first embodiment.
FIG. 2 is an example of the graph of cumulative pore volume distribution of particles.
FIG. 3 is an example of the graph of cumulative pore volume distribution of particles, and an example of the Log differential intrusion (pore size) distribution thereof.
FIG. 4 is a schematic view of garnet-type crystal structure.
FIG. 5 is a cross-section of a power storage device of the second embodiment.
FIG. 6 is a cross-section of a power storage device of the third embodiment.
FIG. 7 is an example of the graph of cumulative pore volume distribution of particles of Comparative Example.

### DESCRIPTION OF EMBODIMENTS

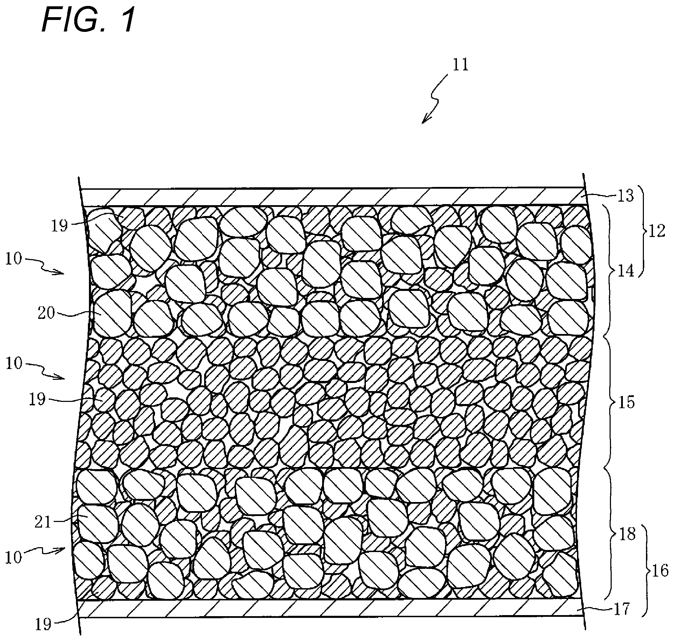

Hereinafter, a preferred embodiment of the present invention will be described with reference to the drawings. FIG. 1 is a schematic cross-section of a power storage device 11 including a composite 10 according to a first embodiment. The power storage device 11 of the first embodiment corresponds to a lithium ion solid battery employing a power generation element formed of a solid. The expression "a power generation element formed of a solid" refers to that the skeleton of the power generation element is formed of a solid," and encompasses a form in which the skeleton is impregnated with liquid.

The power storage device 11 includes a positive electrode layer 12, a separator 15, and a negative electrode layer 16 in that order. The positive electrode layer 12, separator 15, and negative electrode layer 16 are built in a case (not illustrated).

The positive electrode layer 12 includes a current-collector layer 13, and an active material layer 14 stacked thereof. The current-collector layer 13 is a member having electrical conductivity. Examples of the material of the current-collector layer 13 include a metal selected from among Ni, Ti, Fe, and Al, an alloy or a stainless steel containing two or more elements thereof, and a carbon material.

The active material layer 14 contains a composite 10 and an active material 20. The composite 10 contains particles 19 of a solid electrolyte. For lowering the resistance of the active material layer 14, the active material layer 14 may contain a conducting aid. Examples of the conducting aid include carbon black, acetylene black, Ketjen black, carbon fiber, Ni, Pt, and Ag.

Examples of the active material 20 include a metal oxide in which the metal includes a transition metal, a sulfur-containing active material, and an organic active material. Examples of the metal oxide in which the metal includes a transition metal include a metal oxide containing Li and at least one element selected from among Mn, Co, Ni, Fe, Cr, and V. Examples of the metal oxide in which the metal includes a transition metal include LiCoO₂, LiNi_{0.8}Co_{0.15}Al_{0.05}O₂, LiMn₂O₄, LiNiVO₄, LiNi_{0.5}Mn_{1.5}O₄, LiNi_{1/3}Mn_{1/3}Co_{1/3}O₄, and LiFePO₄.

In order to suppress reaction between the active material 20 and the particles 19, a coating layer may be provided on the active material 20. Examples of the coating layer include Al₂O₃, ZrO₂, LiNbO₃, Li₄Ti₅O₁₂, LiTaO_{3,} LiNbO₃, LiAlO₂, Li₂ZrO₃, Li₂WO₄, Li₂TiO₃, Li₂B₄O₇, Li₃PO₄, and Li₂MoO₄.

Examples of the sulfur-containing active material include S, TiS₂, NiS, FeS₂, Li₂S, MoS₃, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

The separator 15 isolates the positive electrode layer 12 from the negative electrode layer 16, to thereby establish interlayer electrical insulation. The separator 15 is formed of the composite 10. The composite 10 contains the particles 19 and an electrolytic solution. The composite 10 may further contain a binder.

The negative electrode layer 16 includes a current-collector layer 17, and an active material layer 18 stacked thereof. The current-collector layer 17 is a member having electrical conductivity. Examples of the material of the current-collector layer 17 include a metal selected from among Ni, Ti, Fe, Cu, and Si, an alloy or a stainless steel containing two or more elements thereof, and a carbon material.

The active material layer 18 contains the composite 10 and an active material 21. For lowering the resistance of the active material layer 18, the active material layer 18 may contain a conducting aid. Examples of the conducting aid include carbon black, acetylene black, Ketjen black, carbon fiber, Ni, Pt, and Ag. Examples of the active material 21 include Li, Li-Al alloy, Li₄Ti₅O₁₂, graphite, In, Si, Si-Li alloy, and SiO. Similar to the separator 15, the active material layers 14 and 18 may contain a binder.

The power storage device 11 is fabricated through, for example, the following procedure. Firstly, an electrolytic solution containing a lithium salt dissolved in a solvent is mixed with the particles 19, and further mixed with a binder dissolved in a solvent, to thereby prepare a slurry. The slurry is molded into a tape, followed by drying, to thereby yield a green sheet (i.e., an electrolyte sheet) for providing the separator 15.

Separately, an electrolytic solution containing a lithium salt dissolved in a solvent is mixed with the particles 19, and the mixture is further mixed with the active material 20. Then, the resultant mixture is further mixed with a solution formed by dissolving a binder in a solvent, to thereby prepare a slurry. The slurry is molded into a tape on the current-collector layer 13, followed by drying, to thereby yield a green sheet (i.e., a positive electrode sheet) for providing the positive electrode layer 12.

Yet separately, an electrolytic solution containing a lithium salt dissolved in a solvent is mixed with the particles 19, and the mixture is further mixed with the active material 21. Then, the resultant mixture is further mixed with a solution formed by dissolving a binder in a solvent, to thereby prepare a slurry. The slurry is molded into a tape on the current-collector layer 17, followed by drying, to thereby yield a green sheet (i.e., a negative electrode sheet) for providing the negative electrode layer 16.

The electrolyte sheet, the positive electrode sheet, and the negative electrode sheet are cut into shapes of interest, respectively. Then, the positive electrode sheet, the electrolyte sheet, and the negative electrode sheet are stacked in that order, and the stacked product is pressed, to thereby form an assembly. A terminal (not illustrated) is connected to each of the current-collectors 13 and 17, and the product is placed in a case (not illustrated), then closing the case, whereby the power storage device 11 including the positive electrode layer 12, the separator 15, and the negative electrode layer 16 is fabricated. Thus, a sheet containing the composite 10 may serve as an electrolyte sheet, a positive electrode sheet, and a negative electrode sheet.

The particles 19 form an oxide-based solid electrolyte. Examples of the solid electrolyte include a NASICON-type material, a LISICON-type material, an oxide having a perovskite structure, an oxide having a garnet-type structure, and an oxide-based glass. The solid electrolyte includes one or more species of the oxides.

The NASICON-type material is represented by a general formula AₓM₂(TO₄)₃. Examples of A include Na and Li; examples of M include Zr, Ti, V, Mn, Cr, Fe, Ni, Al, and Ge; and examples of T include P, Si, and As. Examples of the material include Na₃V₂(PO₄)₃, Li₁₊ₓAlₓTi₂₋ₓ(PO₄)₃, and Li₁₊ₓGeₓTi₂₋ₓ(PO₄)₃. Examples of the LISICON-type material include Li₄₋₂ₓZnₓGeO₄ (0≤x≤1). Examples of the oxide having a perovskite structure include LiₓLa_{(1-x)/3}NbO₃ and La_{2/3-X}Li_{3X}TiO₃ (0≤x≤1).

The crystal structure of a garnet-type oxide is represented by a general formula C₃A₂B₃O₁₂. An oxide having a garnet-type structure is preferred, for its excellent resistance to chemical reduction. Examples of the oxide-type glass include Li₂O-SiO₂, Li₂O-P₂O₅, Li₂O-Al₂O₃, Li₂O-Al₂O₃-TiO₂-P₂O₅, and Li_{3-X}P(O,N)₄ (LIPON, lithium phosphate oxynitride).

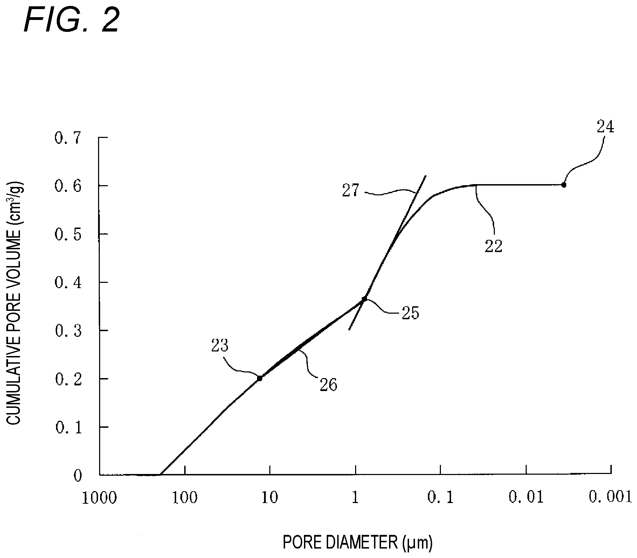

FIG. 2 is an example of a graph 22 of cumulative pore volume distribution of the particles 19 as determined through mercury porosimetry, assuming that the pores of the particles 19 uniquely have a cylindrical shape, and the pore size is represented by a corresponding diameter. In the graph 22, the logarithmic-scale horizontal axis represents the pore size (pore diameter) of the particles 19, and the vertical axis represents the cumulative pore volume of the particles 19.

The graph 22 includes a first point 23 (at a pore size of 10.3 µm), a second point 24 (at a pore size of 3.6 nm), and a change point 25 between the first point 23 and the second point 24. In the graph 22, it is highly possible that an area corresponding a pore size greater than the first point 23 (a pore size of 10.3 µm) includes information about inter-particle space. That is, it is highly possible that information about the pores of the particles 19 is not correctly reflected. Thus, the area is excluded from the target of investigation.

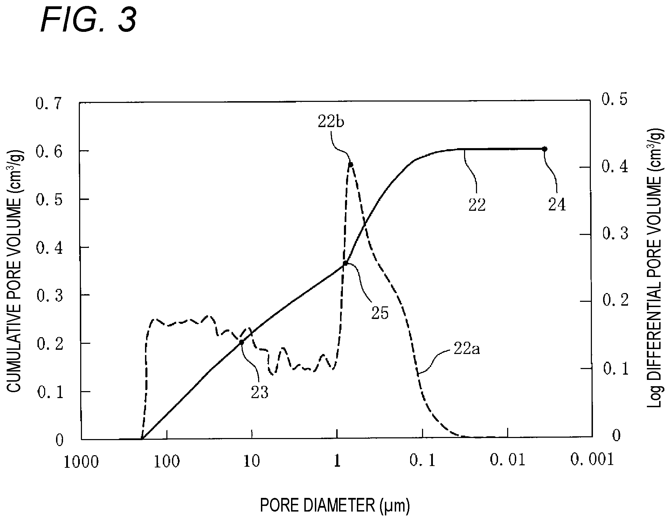

FIG. 3 is an example of a graphic feature in which the graph 22 (solid line) of the cumulative pore volume distribution of the particles 19 and a graph 22a (broken line) of the Log differential intrusion distribution are laid to overlap each other. The graph 22a is obtained by dividing the differential pore volume (i.e., an increase in pore volume) in a measurement point-to-point range (segment) by a logarithmic difference in pore size and plotting the thus-obtained values with respect to a mean pore size in respective segments.

The change point 25 is a point at which the slope of a tangent on the graph 22 drastically changes. The graph 22a reliably reflects the change in cumulative pore volume near the change point 25. Of the pore sizes of the particles obtained at the half value of the peak 22b of the graph 22a, the greater value is almost equivalent to the pore size at the change point 25 on the graph 22.

Referring back to FIG. 2, in the present embodiment, the change point 25 is present within a pore size range of 1 µm to 0.1 µm. The sum of the pore volumes (cm³/g) between the first point 23 (at a pore size of 10.3 µm) and the change point 25 is smaller than that between the change point 25 and the second point 24 (at a pore size of 3.6 nm).

The slope of a tangent at a point on the graph 22 heading from the first point 23 (at a pore size of 10.3 µm) to the second point 24 (at a pore size of 3.6 nm) has such a feature that, in a vicinity of the change point 25, the slope of a tangent 27 between the change point 25 and the second point 24 becomes greater than the slope of a tangent between the first point 23 and the change point 25. The change point 25 at which the aforementioned feature in terms of slope of tangent is established exists at only one position on the graph 22. The existence of the change point 25 at which the aforementioned feature in terms of slope of tangent is established indicates that the graph 22a of Log differential intrusion distribution of the particles 19 has a peak 22b between the change point 25 and the second point 24. According to the feature, the surfaces of the particles 19 can be optimized.

In the case where the particles 19 are formed of an oxide having a garnet-type crystal structure including Li, La, and Zr, when the particles 19 react with water or carbon dioxide present in air, an electrically resistive film containing lithium carbonate or lithium hydroxide, which has low ion conductivity, is formed in the surfaces of the particles 19. Formation of the electrically resistive film results in a drop in ion conductivity of the particles 19. Further, when the particles 19 on which a resistive film has been formed are mixed with an electrolytic solution so as to produce the composite 10, in some cases, the resistive film reacts with the electrolytic solution, to thereby form a gel by an increase in viscosity. Thus, the particles 19 preferably have resistance with respect to formation of electrically resistive film.

The particles 19 which exhibit the change point 25 on the graph 22 (see FIG. 2) of cumulative pore volume distribution, the surface area of the entire particles 19, which area allows to react with water or carbon dioxide present in air, decreases, whereby formation of electrically resistive film can be suppressed. Thus, such a feature is advantageous, from the viewpoints of securing ion conductivity of the particles 19 and suppressing gelation of the composite 10.

In the present embodiment, the slope of a tangent at a point on the graph 22 heading from the second point 24 (at a pore size of 3.6 nm) to the first point 23 (at a pore size of 10.3 µm) gradually increases to the change point 25, as the distance from the second point 24 increases. The slope of a tangent at a point on the graph 22 heading from the change point 25 to the first point 23 is smaller than the slope of the tangent 27 at the change point 25 at any point between the change point 25 and the first point 23.

If a peak is present between the change point 25 and the first point 23 in the Log differential intrusion distribution, the pore size in the case where the distribution has the peak is considerably large. In such a case, mechanical strength of the particles may decrease in the mode of, for example, cracking of particles starting from the pores. In contrast, since the particles 19 have an optimized surface, mechanical strength of the particles 19 can be secured.

If a peak is present between the change point 25 and the first point 23 in the Log differential intrusion distribution, the pore volume in the case where the distribution has the peak is considerably large. In such a case, when a particle-containing sheet is formed through the doctor blade method, the sheet may be provided with irregularities (bubbles) due to gas present in the pores of the particles. In contrast, since the particles 19 have an optimized surface, formability of the sheet by use of a slurry containing the particles 19 can be secured.

The slope of the line segment 26 connecting the first point 23 to the change point 25 is smaller than the slope of the tangent 27 at the change point 25. The slope of the line segment 26 is preferably 0.035 cm³/g/µm or less, more preferably 0.020 cm³/g/µm or less, still more preferably 0.015 cm³/g/µm or less. When the Log differential intrusion distribution between the change point 25 and the first point 23 becomes broader; i.e. the pore volume of the particles having a pore size at between the change point 25 and the first point 23 becomes relatively smaller, the conditions are advantageous from the viewpoint of securing formability of the sheet by use of a slurry containing the particles 19 and mechanical strength of the particles 19.

In the graph 22, the sum of the pore volumes between the first point 23 and the change point 25 is preferably 0.2 cm³/g or less, more preferably 0.15 cm³/g or less, still more preferably 0.1 cm³/g or less. The conditions are advantageous from the viewpoints of securing formability of the sheet by use of a slurry containing the particles 19 and mechanical strength of the particles 19.

In the graph 22, the sum of the pore volumes between the first point 23 and the second point 24 is preferably less than 0.4 cm³/g, whereby the rise in the pore volume of the particles 19 cannot be excessive. The conditions are advantageous from the viewpoint of securing formability of the sheet by use of a slurry containing the particles 19 and mechanical strength of the particles 19.

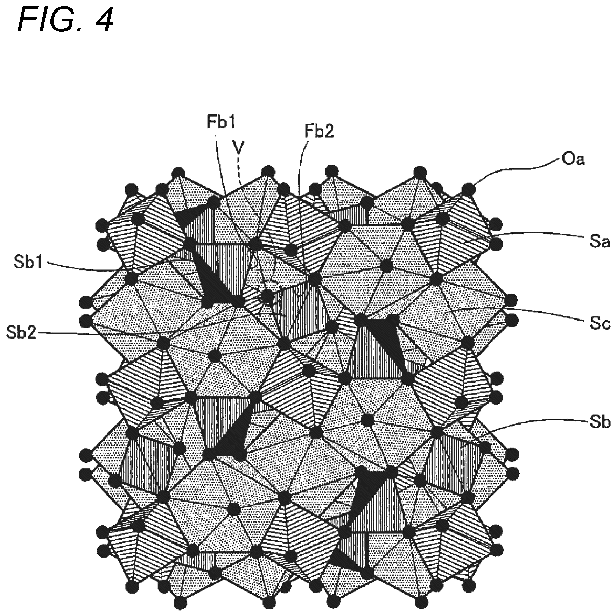

With reference to FIG. 4, the oxide having a garnet-type structure will be described. FIG. 4 is a schematic view of a garnet-type crystal structure represented by a general formula C₃A₂B₃O₁₂.

In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The particles 19 generally have a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in Li₇La₃Zr₂O₁₂ having a garnet-type crystal structure, La is present in the C sites (Sc); Zr in the A sites (Sa), and Li in the B sites (Sb) and the vacancy (V).

The garnet-type crystal structure exhibits an XRD pattern similar to that of an X-ray diffraction file No. 422259 (Li₇La₃Zr₂O₁₂) of CSD (Cambridge Structural Database). As compared with No. 422259, the particles 19 may have differences in the type of elements forming oxide, the Li concentration, and the like. Therefore, diffraction angle and intensity ratio may vary. A typical crystal structure in relation to the above is a cubic system (space group: Ia-3d ("-" is an over-line representing rotary inversion), JCPDS:84-1753).

Referring back to FIG. 1, when the particles 19 are formed of a garnet-type oxide, a typical example of the oxide is Li₇La₃Zr₂O₁₂. Regarding the particles 19, a part of the elements forming Li₇La₃Zr₂O₁₂ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the particles 19 include Li₆La₃Zr_{1.5}W_{0.5}O₁₂, Li_{6.15}La₃Zr_{1.75}Ta_{0.25}Al_{0.2}O₁₂, Li_{6.15}La₃Zr_{1.75}Ta_{0.25}Ga_{0.2}O₁₂, Li_{6.25}La₃Zr₂Ga_{0.25}O₁₂, Li_{6.4}La₃Zr_{1.4}Ta_{0.6}O₁₂, Li_{6.5}La₃Zr_{1.75}Te_{0.25}O₁₂, Li_{6.75}La₃Zr_{1.75}Nb_{0.25}O₁₂, Li6.9La3Zr1.675Ta0.289Bi0.036O12, Li6.46Ga0.23La3Zr1.85Y0.15O12, Li6.8La2.95Ca0.05Zr1.75Nb0.25O12, Li_{7.05}La_{3.00}Zr_{1.95}Gd_{0.05}O₁₂, and Li_{6.20}Ba_{0.30}La_{2.95}Rb_{0.05}Zr₂O₁₂.

Particularly, the particles 19 preferably contain at least one of Mg and element A (A represents at least one element selected from the group consisting of Ca, Sr, and Ba), and satisfy all the following conditions (1) to (3) regarding mole proportions of the elements. Alternatively, the particles 19 preferably contain both Mg and element A, and satisfy all the following conditions (4) to (6) regarding mole proportions of the elements. From the viewpoint of elevating the ion conductivity of the particles 19, element A is preferably Sr. $1.33 \leq Li / \left(La+A\right) \leq 3$ $0 \leq Mg / \left(La+A\right) \leq 0.5$ $0 \leq A / \left(La+A\right) \leq 0.67$ $2.0 \leq Li / \left(La+A\right) \leq 2.6$ $0.01 \leq Mg / \left(La+A\right) \leq 0.14$ $0.04 \leq A / \left(La+A\right) \leq 0.17$

The median diameter, as the circle-equivalent diameter, of the particles 19 emerging in a cross-section of the separator 15 is preferably 0.5 to 10 µm, more preferably 0.5 to 6 µm. The preference of the median diameter is based on adjustment the surface areas of the particles 19 to an appropriate value so as to secure the amount of Li ions transferring between the particles 19 and the electrolytic solution present on the surfaces of the particles 19.

For determining the median diameter of the particles 19, firstly, a cross-sectional SEM (scanning electron microscopic) image of the particles 19 is analyzed. The particles emerge on the cross-section of the separator 15 (e.g., a polished surface, a surface obtained through irradiation with a focused ion beam (FIB), or a surface obtained through ion milling). Then, a circle-equivalent diameter is calculated from the area of each particle 19, to thereby determine the volume-basis particle size distribution. The median diameter is defined as a circle-equivalent diameter at which the cumulative value of the frequency in the particle size distribution is 50%. The area of the SEM image for determining the particle size distribution is adjusted to 400 µm² or more of the area in the separator 15, for securing the accuracy.

The composite 10 contains an electrolytic solution of a lithium salt dissolved in a solvent. The lithium salt is a compound used for the transfer of cations between the positive electrode layer 12 and the negative electrode layer 16. Examples of the anion of the lithium salt include halide anions (e.g., I⁻, Cl⁻, and Br⁻), SCN⁻, BF₄⁻, BF₃(CF₃)⁻, BF₃(C₂F₅)⁻, PF₆⁻, ClO₄⁻, SbF₆⁻, N(SO₂F)₂⁻, N(SO₂CF₃)₂⁻, N(SO₂C₂F₅)₂⁻, B(C₆H₅)₄⁻, B(O₂C₂H₄)₂⁻, C(SO₂F)₃⁻, C(SO₂CF₃)₃⁻, CF₃COO⁻, CF₃SO₂O⁻, C₆F₅SO₂O⁻, B(O₂C₂O₂)₂⁻, and RCOO⁻ (wherein R represents a C1 to C4 alkyl group, a phenyl group, or a naphthyl group).

The anion of the lithium salt is preferably a sulfonylimide anion, having a sulfonyl group -S(=O)₂-, such as N(SO₂F)₂⁻, N(SO₂CF₃)₂⁻, or N(SO₂C₂F₅)₂⁻. Sulfonylimide anion is advantageous, since it does not actively cause a rise in viscosity of electrolytic solution and a drop in ion conductivity, even when the salt concentration increases. In addition, formation of a coating film (SEI) having high stability and low electrical resistance can suppress decomposition of electrolytic solution via chemical reduction and widen the reduction-side potential window.

In some cases, N(SO₂F)₂⁻ may be abbreviated as [FSI]⁻ (bis(fluorosulfonyl)imide anion), and N(SO₂CF₃)₂⁻ may be abbreviated as [TFSI]⁻ (bis(trifluoromethanesulfonyl)imide anion). The lithium salt is preferably lithiumbis (fluorosulfonyl)imide (LiFSI). LiFSI does not actively cause a rise in viscosity of electrolytic solution and effectively forms suitable passivation film (SEI).

No particular limitation is imposed on the solvent of the electrolytic solution, so long as the solvent can dissolve the lithium salt. Examples of the solvent include a carbonate ester, an aliphatic carboxylate ester, a phosphate ester, a γ-lactone, an ether, a nitrile, sulfolane, dimethylsulfoxide, a fluorous solvent, and an ionic liquid. A mixture of these solvents may also be used.

Examples of the carbonate ester include cyclic carbonate esters such as propylene carbonate, ethylene carbonate, butylene carbonate, vinylene carbonate, vinylethylene carbonate, and fluoroethylene carbonate; and chain carbonate esters such as dimethyl carbonate, diethyl carbonate, and ethyl methyl carbonate.

Examples of the aliphatic carboxylate ester include methyl formate, methyl acetate, and ethyl propionate. Examples of the phosphate ester include trimethyl phosphate. Examples of the γ-lactone include γ-butyrolactone. Examples of the ether include chain ethers such as 1,3-dioxolane and 1,2-dialkoxyethane; and cyclic ethers such as tetrahydrofuran and 2-methyltetrahydrofuran. Examples of the nitrile include acetonitrile and propionitrile. The fluorous solvent is a hydrocarbon compound in which a hydrogen atom of hydrocarbon is substituted by a fluorine atom, or its derivative.

The ionic liquid is a compound composed of a cation and an anion and assumes liquid at ambient temperature and pressure. The ionic liquid is preferred, for its relatively wide potential window and high flame resistance. Suitably, the ionic liquid has a cation which is one or more species selected from the group consisting of ammonium, imidazolium, pyrrolidinium, and piperidinium.

No particular limitation is imposed on the anion moiety of the ionic liquid. Examples of the anion moiety include inorganic anions such as BF₄⁻ and N(SO₂F)₂⁻; and organic anions such as B(C₆H₅)₄⁻, CH₃SO₃⁻, CF₃SO₃⁻, N(SO₂CF₃)₂⁻, and N(SO₂C₄F₉)₂⁻. The anion moiety of the ionic liquid is preferably a fluorine atom-containing fluoro-based anion for its high reactivity.

Examples of the ionic liquid include N,N-diethyl-N-methyl-N-(2-methoxyethyl)ammonium bis(fluorosulfonyl)imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13FSI), and N-methyl-N-propylpyrrolidinium bis(trifluoromethanesulfonyl)imide (P13TFSI). A mixture thereof may also be employed.

The ionic liquid may be a solvated ionic liquid. Examples of the solvated ionic liquid include a solution prepared by dissolving a lithium salt in a sulfone-type solvent (e.g., sulfolane or a sulfolane derivative) or a glyme-type solvent (e.g., tetraglyme).

The salt concentration of the electrolytic solution is preferably 4.0 mol/kg or less. When the salt concentration of the electrolytic solution exceeds 4.0 mol/kg, the viscosity of the electrolytic solution considerably tends to increase, thereby lowering the percent ion conductivity of the composite 10. The salt concentration of the electrolytic solution contained in the composite 10 is determined through, for example, the following procedure. Notably, the procedure will be described in the case of the composite 10 serving as the separator 15, but the description will be applicable to the composite 10 serving as the active material layer 14 or 18.

Firstly, the separator 15 is crushed and immersed in a solvent, whereby the electrolytic solution contained in the separator 15 is extracted to the solvent. Then, the mixture is separated into a solid component and a liquid component by means of a centrifuge. The thus-separated liquid component is subjected to high-frequency inductively coupled plasma (ICP) analysis, to thereby determine the Li content.

Also, the type of the organic solvent contained in the separator 15 is characterized through, for example, gas chromatograph mass analysis (GC-MS). Through thermogravimetric differential thermal analysis (TG-DTA), a species-known organic solvent (hereinafter may also be referred to as a "standard substance") and the separator 15 are analyzed. By comparing the analytical results of the standard substance with those of the separator 15, the amount of the organic solvent contained in the separator 15 is determined. Based on the Li content of the liquid component and the organic solvent content of the separator 15, the lithium salt mole concentration by mass (mol/kg) of the electrolytic solution is calculated.

In the composite 10, the ratio of the volume of the particles 19 to the total volume of the particles 19 and the electrolytic solution is preferably 52% or greater and less than 100%, more preferably 61% or greater and less than 100%. Since an appropriate combination of the particles 19 with the electrolytic solution can reduce the interfacial resistance among the particles 19, the Li ion transport number of the composite 10 can be more enhanced, as compared with that of a conventional electrolytic solution. As a result, operational stability of the power storage device 11 employing the composite 10 can be enhanced.

Each of the particle 19 content and the electrolytic solution content (vol%) is determined through the following procedure. Specifically, the separator 15 is frozen or embedded in 4-functional epoxy resin or the like to solidify. Then, a vision field (×5,000) selected at random from a cross-section of the separator 15 is analyzed under a SEM equipped with an energy dispersive X-ray spectrometer (EDS). In the analysis, distribution of elements (La, Zr, and S) is characterized, or image analysis of a backscattered electron image is conducted in terms of contrast, to thereby determine the area attributed to each of the particles 19 and the electrolytic solution. The relative area in the cross-section of the separator 15 with respect to the area of the composite 10 is considered as the corresponding volume ratio, to thereby derive the particle 19 content and the electrolytic solution content (vol%).

The Li ion conductivity of the composite 10 is determined by the type, salt concentration, and the like of the particles 19, the lithium salt, and the organic solvent. The Li ion conductivity of the composite 10 at 25°C is preferably 1.0×10⁻⁵ S/cm or higher, from the viewpoint of securing the output density of the power storage device 11 containing the composite 10.

Since the composite 10 contains anions derived from a lithium salt and the electrolytic solution, the Li ion conductivity of the composite 10 is determined through the following procedure. Specifically, a current-collector is closely attached onto each surface of the sheet-form composite 10, to thereby yield a symmetric cell. Then, multiplying the total ion conductivity calculated through the AC impedance method by the Li ion transport number, to thereby yield the Li ion conductivity. Notably, the transport number of Li ion is determined through the AC impedance method and a steady state DC method.

The composite 10 may contain a binder for binding the particles 19. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

Examples of the vinylidene fluoride-based polymer include a vinylidene fluoride homoploymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. Polymerization of one or more copolymerizable monomers with vinylidene fluoride forms a copolymer of interest.

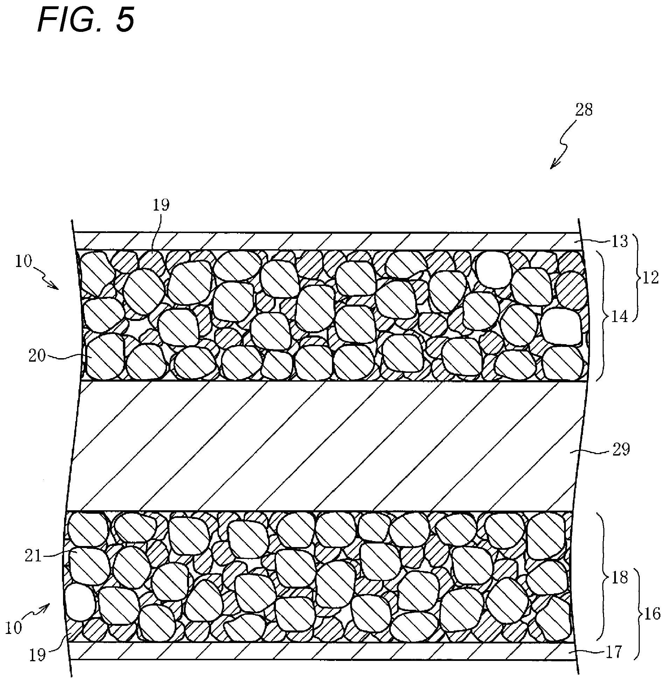

With reference to FIG. 5, a second embodiment will be described. In the first embodiment, a case in which the composite 10 is employed in the power storage device 11 having a solid power generating element has been described. In the second embodiment, there will be described a case in which the composite 10 is employed in a liquid-type lithium ion battery employing an organic solvent in the electrolyte. In the second embodiment, the same members as described in the first embodiment are denoted by the same reference numerals, and further descriptions thereof will be omitted. FIG. 5 is a schematic cross-section of a power storage device 28 of the second embodiment.

The power storage device 28 includes the positive electrode layer 12, a separator 29, and the negative electrode layer 16 in that order. The stacked product is built in a case (not illustrated). The separator 29 has durability to active materials 20 and 21 and an electrolytic solution contained in the positive electrode layer 12 and the negative electrode layer 16 and is formed of a porous body which allows passage of lithium ions but has no electron conductivity. Examples of the separator 29 include a nonwoven fabric and a porous membrane formed of cellulose, polypropylene, polyethylene, etc. Since the electrolytic solution is the same as employed in the first embodiment, further descriptions are omitted.

The power storage device 28 of the second embodiment contains the composite 10 in the positive electrode layer 12 or the negative electrode layer 16, operational stability is enhanced, similar to the case of the power storage device 11 of the first embodiment.

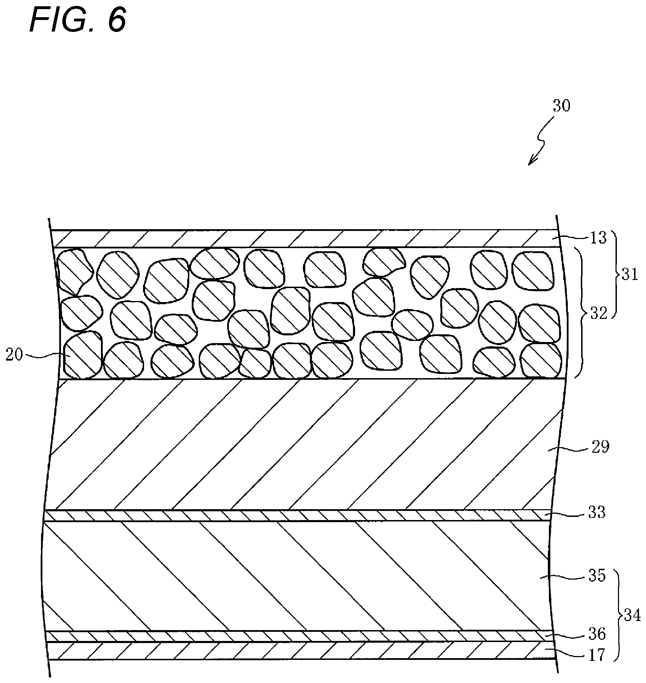

With reference to FIG. 6, a third embodiment will be described. In the first and second embodiments, a case in which the composite 10 is employed in the positive electrode layer 12, the separator 15, or the negative electrode layer 16 has been described. In the third embodiment, there will be described a case in which the composite 10 is employed in a protective layer 33 or 36. In the third embodiment, the same members as described in the first or second embodiment are denoted by the same reference numerals, and further descriptions thereof will be omitted. FIG. 6 is a schematic cross-section of a power storage device 30 of the third embodiment.

The power storage device 30 includes a positive electrode layer 31, a separator 29, and a negative electrode layer 34. The stacked product is built in a case (not illustrated). The power storage device 30 corresponds to a liquid-type lithium ion battery employing an organic solvent in the electrolyte.

The positive electrode layer 31 is formed of the current-collector layer 13 and an active material layer 32 stacked thereon. The active material layer 32 contains an active material 20. In order to lower the resistance of the active material layer 32, the active material layer 32 may contain a conducting aid such as carbon black, acetylene black, Ketjen black, carbon fiber, Ni, Pt, and Ag.

A protective layer 33 intervenes between the separator 29 and the negative electrode layer 34. The protective layer 33 contains the composite 10.

The negative electrode layer 34 includes an active material layer 35, a protective layer 36, and a current-collector layer 17 stacked in that order. Examples of the material of the active material layer 35 include Li, Li-Al alloy, Li-Sn alloy, Li-Si alloy, Li-Mg alloy, Li-Si alloy, and Si-Li alloy. The protective layer 36 contains the composite 10. The protective layers 33 and 36 are provided through, for example, application onto a stacked sheet, the separator 29, or the current-collector layer 17.

The particles 19 which are contained in the composite 10 and which have a garnet-type crystal structure including Li, La, Zr, and O has resistance to chemical reduction by metallic lithium contained in the active material layer 35. As a result, operational stability of the power storage device 30 increases. In addition, the protective layer 33 intervening between the active material layer 35 and the separator 29 suppresses short circuit possibly caused by dendritic growth of metallic lithium. The protective layer 36 intervening between the active material layer 35 and the current-collector layer 17 suppresses degradation of the current-collector layer 17.

### EXAMPLES

The present invention will next be described in detail by way of examples, which should not be construed as limiting the invention thereto.

### (Example 1)

Li₂CO₃, MgO, La(OH)₃, SrCO₃, and ZrO₂ were weighed in specific amounts so as to form Li_{6.95}Mg_{0.15}La_{2.75}Sr_{0.25}Zr₂O₁₂. In consideration of volatilization of Li during firing, the amount of Li₂CO₃ was adjusted in about 15 mol% excess (as reduced to Li). The thus-weighed raw materials and an organic solvent were put into a nylon-made pot with zirconia balls, and the mixture was subjected to pulverization with the ball mill for 15 hours. The resultant slurry was removed from the pot and dried, and then calcined on an MgO plate at 900°C for 1 hour and 1,200°C for 10 hours. The thus-obtained calcined product was placed on an MgO plate and fired at 1,100°C for 4 hours in an inter gas atmosphere, to thereby yield a fired product.

The fired product was further pulverized by means of a dry jet mill (Nano Jetmizer (registered trademark) NJ-80, product of Aishin Nano Technologies, Co., Ltd.). In pulverization, the fired product was caused to pass once through the jet mill at a jet nozzle pressure of 0.7 MPa and a milling rate of 120 g/Hr in a nitrogen atmosphere, to thereby yield particles of Example 1.

### (Example 2)

The procedure of Example 1 was repeated, except that the jet nozzle pressure and the milling rate were changed to 0.8 MPa and 150 g/Hr, respectively, to thereby yield particles of Example 2.

### (Example 3)

The procedure of Example 1 was repeated, except that the jet nozzle pressure and the milling rate were changed to 1.0 MPa and 200 g/Hr, respectively, to thereby yield particles of Example 3.

### (Example 4)

The procedure of Example 1 was repeated, except that the jet nozzle pressure and the milling rate were changed to 0.6 MPa and 100 g/Hr, respectively, to thereby yield particles of Example 4.

### (Comparative Example)

Particles were produced through a sol-gel method so as to attain a composition: Li_{6.95}Mg_{0.15}La_{2.75}Sr_{0.25}Zr₂O₁₂. Zr(OC₃H₇)₄ was used as a Zr source, and 1-butanol was used as a solvent. The mixture was refluxed at 118°C. Acetic acid and water were added to the resultant solution, and the mixture was stirred, to thereby yield a Zr-containing precursor.

Separately, La(NO₃)₃·6H₂O was used as an La source and dried at 150°C. Then, 1-butanol was added to the dry product, followed by stirring, to thereby prepare an La-containing precursor. The La-containing precursor and the Zr-containing precursor were mixed together, and stirred at 60°C, to thereby yield an La-Zr-containing precursor.

Metallic lithium, metallic magnesium, and metallic strontium were added to 2-methoxyethanol, and the mixture was refluxed at 125°C, to thereby yield an Li-Mg-Sr-containing precursor. The Li-Mg-Sr-containing precursor and the La-Zr-containing precursor were mixed, and the resultant mixture was stirred at 5°C, and then refluxed at 125°C, to thereby prepare a gel. The gel was fired at 750°C in air for 3 hours, to thereby yield particles of Comparative Example having a particle size on the order of sub-microns.

### (Measurement of pore distribution)

The pores size distribution of each of the particles of Examples 1 to 4 and Comparative Example was measured through porosimetry by means of a pore distribution meter (AutoPore IV 9500 V1.07, product of Micromeritics Instrument Corporation), to thereby determine a cumulative pore volume distribution. The measurement was conducted under the following conditions; sampling amount: 0.5 to 0.7 g, range of measurement: full range (pore size of 3.6 nm to 10.3 µm in calculation of slope of line segment and the like), contact angle of mercury: 130°, surface tension of mercury: 485 mN/m, measurement temperature: 25°C, and measurement pressure: 0.003447 to 344.7 MPa.

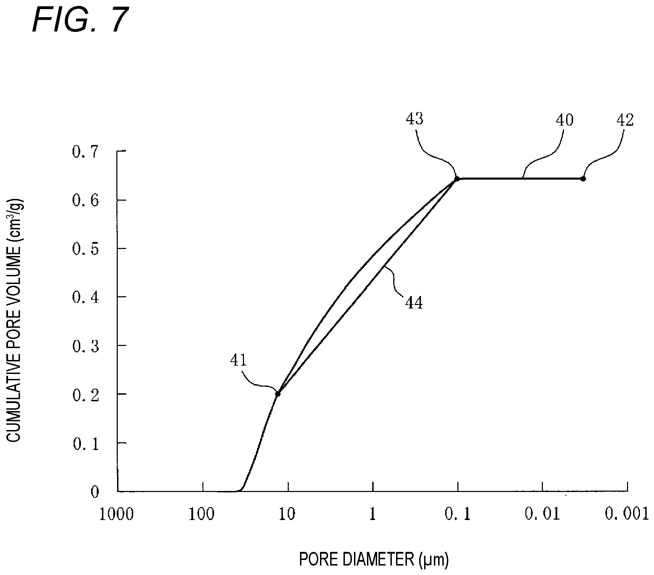

FIG. 7 is graph 40 of cumulative pore volume distribution of particles of Comparative Example. In the graph 40 showing the cumulative pore volume distribution of the particles of Comparative Example, there existed a corner 43 between a first point 41 (at a pore size of 10.3 µm) and a second point 42 (at a pore size of 3.6 nm), but no change point. In contrast, in the graph 22 (see FIG. 2) showing the cumulative pore volume distribution of the particles of Examples 1 to 4, there existed the change point 25 between the first point 23 (at a pore size of 10.3 µm) and the second point 42 (at a pore size of 3.6 nm).

From the graph 22 showing the cumulative pore volume distribution of the particles of Examples 1 to 4, the slope of the line segment 26 connecting the first point 23 to the change point 25, the sum of the pore volume between the first point 23 and the change point 25, and the sum of the pore volume between the first point 23 and the second point 24 were respectively determined. From the graph 40 of the cumulative pore volume distribution of the particles of Comparative Example, the slope of the line segment 44 connecting the first point 41 to the corner 43, and the sum of the pore volume between the first point 41 and the second point 42 were determined. Table 1 shows the results.

**[Table 1]**

| No. | Slope of line segment (cm³/g/µm) | Entire pore volume to change point (cm³/g) | Entire pore volume to 2nd point (cm³/g) | Carbon content (wt%) |
|---|---|---|---|---|
| Ex. 1 | 0.0137 | 0.1230 | 0.3788 | 0.30 |
| Ex. 2 | 0.0112 | 0.0951 | 0.3038 | 0.10 |
| Ex. 3 | 0.0055 | 0.0451 | 0.2139 | 0.03 |
| Ex. 4 | 0.0182 | 0.1853 | 0.3806 | 1.20 |
| Comp. | 0.0389 | - | 0.4121 | 1.82 |

### (Carbon content measurement)

The carbon content (wt%) of each of the particles of Examples 1 to 4 and Comparative Example was measured by means of a carbon/sulfur analyzer (EMIA-920V, product of HORIBA). The carbon content of a unit particle is proportional to the amount of lithium carbonate contained in a resistance layer formed on the surface of the particle. Table 1 shows the results.

As is clear from Table 1, the carbon content of each of Examples 1 to 4 was found to be lower than that of Comparative Example. Conceivably, the entire surface area of the particles 19 reacting with carbon dioxide present in air decreases by the presence of the change point 25 on the graph 22 showing the cumulative pore volume distribution of the particles 19 of Examples 1 to 4, and the presence of a peak between the change point 25 and the second point 24, rather than between the change point 25 and the first point 23, on the graph 22a showing the Log differential intrusion distribution. The conceivable reason for this is that difficulty is encountered in forming a resistance film on the surfaces of the particles 19 of Examples 1 to 4, resulting in a decrease in carbon content as compared with Comparative Example.

In comparison of the slope of line segment of Examples 1 to 4 with that of Comparative Example, the carbon content was found to decrease as the slope decreased. Conceivably, the pore size distribution between the first point 23 (a pore size of 10.3 µm) and the change point 25 considerably influences reaction between the particles 19 and carbon dioxide present in air. Particularly when the slope of the line segment 26 was 0.035 cm³/g/µm or less, the carbon content was found to be successfully reduced, as compared with Comparative Example. The slope of the line segment 26 was found to be preferably 0.020 cm³/g/µm or less, more preferably 0.015 cm³/g/µm or less.

In comparison of the sum of the pore volume between the first point and the second point in Examples 1 to 4 with Comparative Example, the carbon content was found to decrease as the sum of the pore volume decreased. Conceivably, the sum of the pore volume between the first point and the second point considerably influences reaction between the particles 19 and carbon dioxide present in air. Particularly when the sum of the pore volume was less than 0.4 cm³/g, the carbon content was successfully reduced as compared with Comparative Example.

In comparison of the sum of the pore volume between the change point and the first point in Examples 1 to 4, the carbon content was found to decrease as the sum of the pore volume decreased. Conceivably, the sum of the pore volume between the change point and the first point considerably influences reaction between the particles 19 and carbon dioxide present in air. The sum of the pore volume was found to be preferably 0.2 cm³/g or less, more preferably 0.15 cm³/g or less, still more preferably 0.1 cm³/g or less.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above embodiment, the case in which only one change point 25 is present between the first point 23 (a pore size of 10.3 µm) and the second point 24 (a pore size of 3.6 nm) on the graph 22 showing the cumulative pore volume distribution of the particles 19 has been described. However, the technical feature is not necessarily limited thereto. Needless to say, a plurality of change points 25 may be present between the first point 23 and the second point 24, depending on the surface morphology of the particles 19.

In the above-described embodiment, the power storage device 11 has the positive electrode layer 12 in which the active material layer 14 is provided on one surface of the current-collector layer 13, and the negative electrode layer 16 in which the active material layer 18 is provided on one surface of the current-collector layer 17. However, the present invention is not necessarily limited thereto. It should be apparent for those skilled in the art that the elements of the above embodiment can be applied to, for example, a power storage device which has an electrode layer having the current-collector layer 13 provided with the active material layer 14 and the active material layer 18 on each surface (i.e., a so-called bipolar electrode). By alternatingly stacking the bipolar electrode and the separator 15, and inserting the stacked product into a case (not illustrated), a so-called power storage device of a bipolar structure can be obtained.

In the above embodiment, there has been described a case where each of the active material layers 14 and 18 and the separator 15 contains the composite 10. However, the configuration is not necessarily limited thereto. In the power storage device, at least one of the active material layers 14 and 18 and the separator 15 may contain the composite 10.

In the above embodiment, there has been described the composite 10, taking as an example, the power storage devices 11, 28, and 30 serving as a lithium ion battery. However, the configuration is not necessarily limited thereto. Examples of other power storage devices containing the particles 19 include an ion battery employing a carrier ion such as Na⁺, K⁺, Mg²⁺, F⁻, or H⁻, other than Li⁺; an electrochemical capacitor employing electrode redox reaction, redox reaction of ions in electrolytic solution, or an electric double layer; and a metal air battery employing oxygen present in air as a positive electrode active material and a metal such as Li, Zn, Al, Mg, or Fe as a negative electrode active material.

### REFERENCE SIGNS LIST

10: composite
11, 28, 30: power storage device
12, 31: positive electrode layer
14,18: active material layer (sheet)
15: separator (sheet)
16: negative electrode layer
17: current-collector layer
19: particle
22: graph
23: first point
24: second point
25: change point
26: line segment
27: tangent
29: separator
33, 36: protective layer
34: negative electrode layer

## Claims

1. Particles of an oxide-based solid electrolyte, wherein
a graph of cumulative pore volume distribution in which a logarithmic-scale horizontal axis represents a pore size of the particles and a vertical axis represents a pore volume of the particles includes a change point between a first point at a pore size of 10.3 µm and a second point at a pore size of 3.6 nm; and
the slope of a tangent at a point on the graph heading from the first point to the second point has such a feature that, in a vicinity of the change point, the slope of a tangent between the change point and the second point becomes greater than the slope of a tangent between the first point and the change point.

2. The particles according to claim 1, wherein, in the graph, a line segment connecting the first point to the change point has a slope of 0.035 cm³/g/µm or less.

3. The particles according to claim 1 or 2, wherein, in the graph, a sum of pore volume within a range of the first point and the change point is 0.2 cm³/g or less.

4. The particles according to claim 1 or 2, wherein, in the graph, a sum of pore volume within a range of the first point and the second point is less than 0.4 cm³/g.

5. The particles according to claim 1 or 2, wherein the solid electrolyte has a garnet-type crystal structure including Li, La, and Zr.

6. A composite comprising particles as recited in claim 1 or 2 and an electrolytic solution.

7. A sheet comprising a composite as recited in claim 6.

8. A power storage device including a positive electrode layer, a negative electrode layer, and a separator which isolates the positive electrode layer from the negative electrode layer,
which device includes a composite as recited in claim 6.

9. The power storage device according to claim 8, wherein
the separator includes the composite.

10. The power storage device according to claim 8, wherein
at least one of the positive electrode layer and the negative electrode layer includes a current-collector layer;
the power storage device has a protective layer in contact with at least one of the separator and the current-collector layer; and
the protective layer includes the composite.
